Europäisches Patentamt

(19) European Patent Office

Office européen des brevets

(11) Publication number: **0 102 470**
**B1**

(12) **EUROPEAN PATENT SPECIFICATION**

(45) Date of publication of patent specification: **18.03.87**

(51) Int. Cl.⁴: **G 01 B 11/06**

(21) Application number: **83106329.2**

(22) Date of filing: **29.06.83**

(54) Ellipsometers.

(30) Priority: **09.08.82 US 406587**

(43) Date of publication of application:
**14.03.84 Bulletin 84/11**

(45) Publication of the grant of the patent:
**18.03.87 Bulletin 87/12**

(84) Designated Contracting States:
**DE FR GB**

(56) References cited:
**DE-A-2 430 521**
**DE-A-2 616 141**
**US-A-4 105 337**
**US-A-4 168 126**

**IBM - Technical Disclosure Bulletin, Vol. 13, No. 2, July 1970, pages 316 to 317**

(73) Proprietor: **International Business Machines Corporation**
**Old Orchard Road**
**Armonk, N.Y. 10504 (US)**

(72) Inventor: **Chastang, Jean-Claude Andre**
**68 Hatfield Road RFD No. 1**
**Mahopac New York 10541 (US)**
Inventor: **Hildenbrand, Walter William**
**Birch Hill Acres**
**Brewster New York 10509 (US)**
Inventor: **Levanoni, Menachem**
**623 Giordano Drive**
**Yorktown Heights New York 10598 (US)**

(74) Representative: **Lewis, Alan John**
**IBM United Kingdom Limited Intellectual Property Department Hursley Park**
**Winchester Hampshire SO21 2JN (GB)**

Courier Press, Leamington Spa, England.

## Description

This invention relates to ellipsometers for measuring film thickness and more particularly to an ellipsometer system for measuring the thickness of films deposited upon samples in a furnace.

Thin thermal oxide films are grown on semiconductor wafers in special furnaces at elevated temperatures in the range of 900 to 1000°C in highly oxidizing clean atmospheres. At the present time, there is no satisfactory in-situ technique for direct monitoring the thickness of this film while it is being grown in this highly controlled environment. Foreign objects are not permitted inside the furnace. The high degree of accuracy can only be met by ellipsometric techniques.

In the IBM Technical Disclosure Bulletin, Vol. 13 No. 2, July 1970, page 316—317, Taylor and Welber describe a system for monitoring the thickness of a film that is being vapour deposited in a furnace. The furnace constitutes a processing chamber and has an entry window. This system uses a laser beam to measure the increasing thickness of a film by noting the desired point of incidence of a coherent laser beam directed through the entry window at such an angle as to form an elongated spot on a reflective surface on the substrate. The reflected beam is trapped in a beam trap. As the thickness increases, the spot moves from side to side across the substrate. A sensor directed at right angles to the substrate through a window above the substrate senses the motion of the spot of light across the substrate to measure the change in thickness. This method does not measure the thickness in the accuracy required by manufacturers today.

US—A—4,168,126 shows a laser reflected by a pair of parallel rotating mirrors prior to directing the beam towards an object to a detector. However, the object is not in a furnace and a thickness of a film as it is being grown is not being measured.

US—A—4,105,337 describes a plural laser ellipsometer with a beam splitter and a detector. This patent does not describe a method for measuring thin films as they are being grown in a furnace.

Accordingly, the invention provides an ellipsometer system for measuring the thickness of a film deposited upon a substrate, comprising a processing chamber having an entry window, a first substrate having a reflective surface positioned in the chamber in line with the entry window, and means for projecting a laser beam through the entry window onto the reflective surface of the first substrate to provide a first reflected beam, characterised in that a second substrate having a reflective surface is positioned in the chamber in line to receive and reflect the first reflected beam as a second reflected beam, the substrates being so positioned that an outgoing beam is provided by the second reflected beam parallel to the incoming beam, either with or without further reflection by the first substrate or both substrates, in that the outgoing beam is aligned to pass through an exit window from the chamber, and in that first detection means is provided outside the chamber for sensing the outgoing beam after it passes through the exit window, the first detection means comprising two detectors for detecting P and S polarisation components of the outgoing beam after division by an output beam splitter positioned between the exit window and the first detection means.

The scope of the invention is defined by the appended claims: and the invention is hereinafter described with reference to the accompanying drawings in which:—

Figure 1 is a top view of a preferred embodiment of an ellipsometer system in accordance with this invention in which the beam entrance port and exit port are located on opposite ends of the furnace; and

Figures 2, 3, 4 and 5 are top views of preferred embodiments of the ellipsometer system in accordance with this invention in which access to the furnace is restricted to one port which is used both for beam entrance and beam exit in a retroreflective mode.

Description of the preferred embodiment

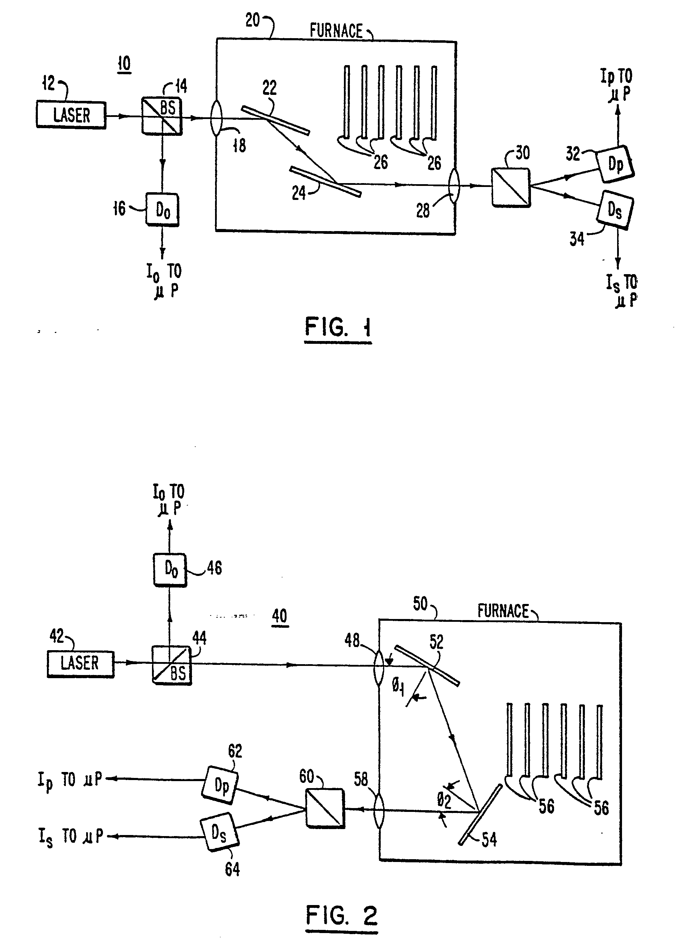

One embodiment of the ellipsometer system for measuring the thickness of a film as it is being deposited on a substrate in a furnace is shown in Figure 1. The ellipsometer system 10 has a laser 12, for example a helium neon laser, that directs a beam to a beam splitter 14. A portion of the beam that is split goes to the detector 16. The detector 16 monitors the input beam intensity. The other part of the beam goes through the window 18 into a closed chamber such as a furnace 20. The beam strikes the first sample wafer 22 which is positioned at an appropriate angle with the entering beam. The beam is reflected off sample 22 onto sample wafer 24 where it is deflected again at an angle so that the resultant reflected beam is parallel to the incoming beam. The two samples 22 and 24 result in a system that is operated in a parallel input and output beam mode. The beam reflected off sample wafer 24 is passed through the exit window 28 of furnace 20 to any polarizing beam splitter, for example, a Wollaston prism 30, which splits the beam into two portions. One portion of the exiting beam goes to the detector 32 which measures the P polarization component that is parallel to the plane of incidence and the other portion of the exiting beam goes to the detector 34 which detects the S polarization component. Films that are deposited on other sample wafers 26 will have the same thickness as the films that are on deposited on wafers 22 and 24 as long as they are in the same temperature zone in the furnace. A mathematical algorithm can be used to convert the reflected intensity measurements $R_p$ and $R_s$ to the desired film parameters. The two sample wafers 22 and 24 are parallel to each other and the whole structure is oriented at an appropriate angle with respect to the entering beam. While two reflections are shown in Figure 1, more can be used if desired. Since the beam is incident on each surface on wafer 22 and wafer 24 at the same angle, the resultant reflection coefficients $R_p$ and $R_s$ are simply the squares of the individual reflection coefficients, that is,

$$R_p = R_{p1}^2 \text{ and } R_s = R_{s1}^2 \text{ (with } R_{p1} = R_{p2} \text{ and } R_{s1} = R_{s2})$$

where subscripts 1 and 2 refer to samples 1 and 2 respectively (i.e. wafers 22 and 24).

The entrance and exit beams are parallel to each other and independent of the structure orientation. Their relative displacement is a measure of the angle of incidence.

Another embodiment, system 40, utilizing two windows in a furnace is shown in Figure 2. In this embodiment laser 42 passes through a beam splitter 44 with a portion of the beam going to the detector 46 and the other portion going through the window 48 of furnace 50. The beam entering the furnace 50 strikes a sample wafer 52 at an angle of θ1 and is directed to a second sample wafer 54 that is positioned at an angle of 90° to the first sample wafer 52. Positioned in the furnace 50 are the other sample wafers 56. The beam is reflected off of sample 54 at an angle θ2 as shown out through the exit window 58 to the Wollaston prism 60 and detectors 62 and 64. In this embodiment the two sample wafers 52 and 54 are perpendicular to each other. The two angles of incidence are not equal, but are complementary to each other, that is, θ2 equals 90· θ1. In this embodiment, access is from one face of the furnace whereas in Figure 1 access was from two faces of the furnace.

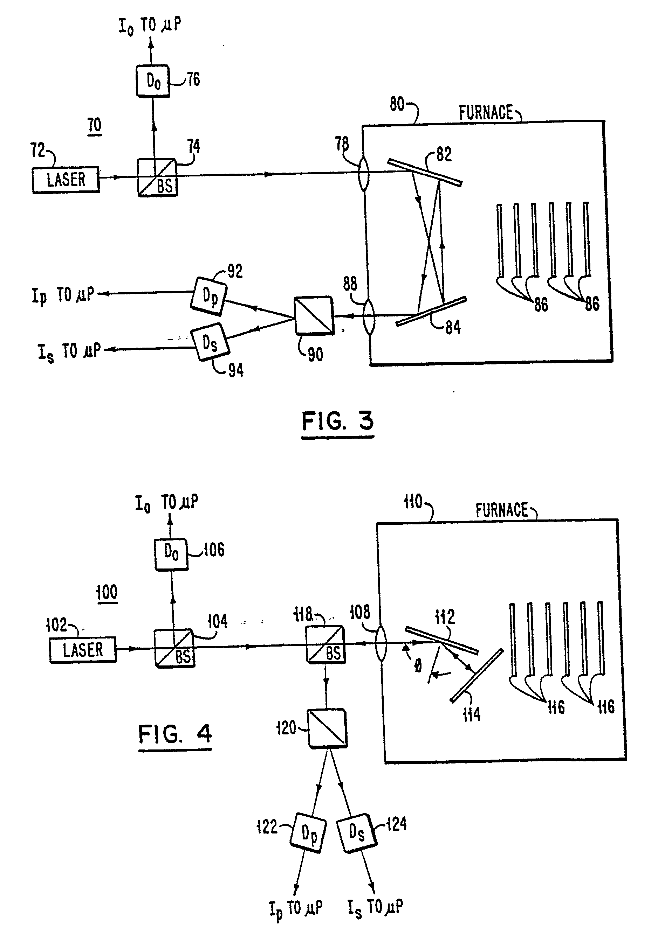

Figure 3 depicts a symmetric ellipsometric system 70, utilizing four reflections. It is possible to use 8, 16 and so forth reflections, but such systems are impractical for the most part. A laser 70 passes a beam through the beam splitter 74 with a portion going to detector 76 and a portion through the entrance window 78 to furnace 80. A beam is deflected off sample wafer 82 to sample wafer 84 which in turn reflects it off sample wafer 82 back to 84 which then reflects the beam through exit window 88. As before, the beam emerging from exit window 88 goes to Wollaston prism 90 and to detectors 92 and 94. In this arrangement the two sample wafers 82 and 84 are fixed at an angle with respect to each other and their incident angles are θ1 = θ4 = 67°, that is, the first and fourth reflections with θ2 and θ3 being 22.5°. (The angles θ1, 2, 3 and 4 are not marked in Figure 3 to avoid confusion). These two sets of incident angles are complementary to one another. This configuration is also retroreflective so that the entrance and exit beams are parallel to each other independent of its orientation.

In Figure 4 the system 100 is used where access is limited to one face of the furnace 110. A laser 102 passes a beam through beam splitter 104 which directs a portion of the beam to detector 106 and a portion through the entrance window 108 on the wall of the furnace 110. The beam strikes sample wafer 112 at an angle of r and is deflected to sample wafer 114. The beam then bounces back from 114 to sample substrate 112 and back through the window 108 to beam splitter 118 where a portion of the beam passes through Wollaston prism 120 to detectors 122 and 124. The angle between the two sample planes 112 and 114 is fixed at 90°—θ where θ is the chosen angle of incidence. This arrangement is retroreflective and the return beam overlaps the incident beam. The total number of reflections is three with the first and third equal to θ while the second is 90°. This structure should be used when access is limited to one port (108). It is highly sensitive for its orientation which can be used with accurate positioning. Any deviations are immediately observed as deviations from overlap of the entrance and the exit beam.

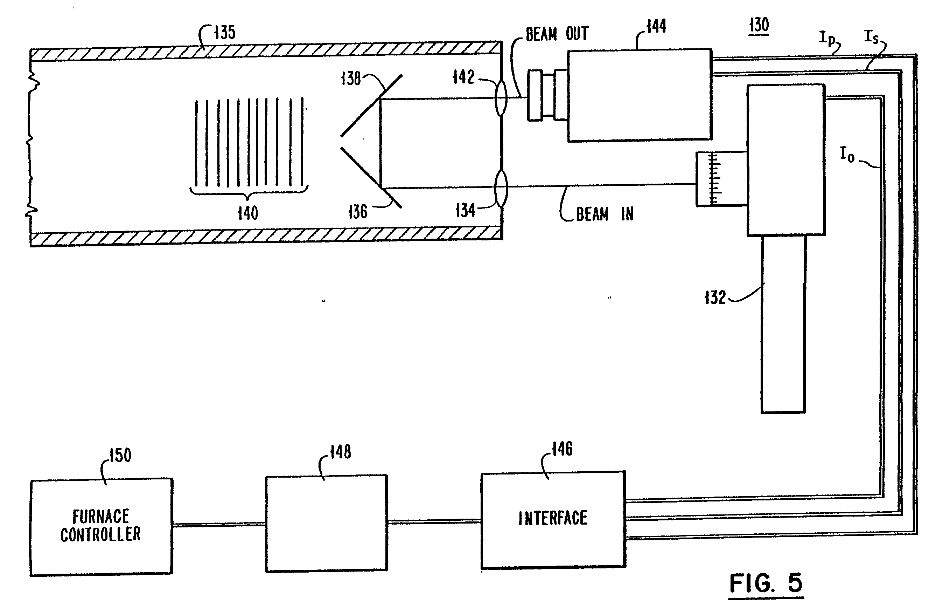

In a preferred embodiment an ellipsometer system 130 for use where access is limited to one face of the furnace is shown in Figure 5. A helium laser 132 passes a beam through window 134 to wafer sample 136. The beam reflected from sample 136 (at a preferred angle of 45°) is reflected (at a preferred angle of 45°) from wafer 138 that is positioned at right angles and end to end with wafer 136. The beam reflected from sample wafer 138 passes out through exit window 142 of furnace 135 to a receiving unit 144 containing elements 30, 32, and 34 in Figure 1, etc. Lines carrying signals $I_p$ and $I_s$ are connected from unit 144 through interface 146 to an instrument controller 148 which is a small general purpose computer. Controller 148 provides an output signal to furnace controller 150 which shuts off the furnace at a desired set point, such as film thickness. The interface 146 also receives an input from laser 132 which includes a detector $D_o$ in Figure 1 which gives a signal $I_o$ sent to interface 146. This signal is employed to monitor laser output intensity to normalize any laser which varies in intensity to eliminate errors due to variations in laser output. This line is an optical accessory for optimum performance.

**Claims**

1. An ellipsometer system (10) for measuring the thickness of a film deposited upon a substrate comprising a processing chamber (20) having an entry window (18: 48: 78: 108: 134), a first substrate (22: 52: 82: 112: 136) having a reflective surface positioned in the chamber in line with the entry window, and means (12, 14: 42, 44: 72, 74: 102, 104: 132) for projecting a laser beam through the entry window onto the reflective surface of the first substrate to provide a first reflected beam, characterised in that a second substrate (24: 54: 84: 114: 138) having a reflective surface is positioned in the chamber in line to receive and reflect the first reflected beam as a second reflected beam, the substrates being so positioned that an outgoing beam is provided by the second reflected beam parallel to the incoming beam, either with or without further reflection by the first substrate or both substrates, in that the outgoing beam is aligned to pass through an exit window (28: 58: 88: 108: 142) from the chamber, and in that first detection means is provided outside the chamber for sensing the outgoing beam after it passes through the exit window, the first detection means comprising two detectors for detecting P and S polarisation components of the outgoing beam after division by an output beam splitter (30: 60: 90: 120) positioned between the exit window and the first detection means.

2. A system as claimed in claim 1, including an incoming beam splitter (14: 44: 74: 104) positioned between the beam projecting means and the entry window.

3. A system as claimed in claim 2, including second detection means (16: 46: 76: 106) associated with the incoming beam splitter.

4. A system as claimed in claim 1, 2 or 3, wherein the entry window (48: 78: 134) and the exit window (58: 88: 136) are on the same side of the chamber.

5. A system as claimed in claim 1, 2 or 3, wherein one window (108) serves as both the entry window and the exit window, and a beam splitter (118) is positioned in front of the one window to separate the outgoing from the incoming beam.

6. A system as claimed in any preceding claim wherein the first substrate and the second substrate are positioned at right angles to each other.

7. A system as claimed in claim 3 or any claim appendant to claim 3, including a data processor (148), and an interface circuit (146) receiving electrical signals representing the magnitude of the two beams produced by the outgoing beam splitter and the magnitude of the incoming beam produced by the incoming beam splitter, and providing an output signal to the data processor containing information as to the relative magnitudes of the two beams.

8. A system as claimed in claim 7, including a furnace controller (150) and wherein the processor (148) generates an input control signal for the controller (150) so that the furnace is controlled in dependence on the input signals to the processor.

**Patentansprüche**

1. Ellipsometersystem (10) zur Messung der Dicke eines auf einem Substrat angeschiedenen Films, mit einer ein Eintrittsfenster (18: 48: 78: 108: 134) aufweisenden Behandlungskammer (20), einem ersten Substrat (22: 52: 82: 112: 136) mit einer reflektierenden Oberfläche, die in der Kammer in Übereinstimmung mit dem Eintrittsfenster angeordnet ist, und Mitteln (12, 14: 42, 44: 72, 74: 102, 104: 132) zur Einstrahlung eines Laser-Strahls durch das Eintrittsfenster auf die reflektierende Oberfläche des ersten Substrats zur Schaffung eines ersten reflektierten Strahls, dadurch gekennzeichnet, daß ein zweites Substrat (24: 54: 84: 114: 138) mit einer reflektierenden Oberfläche in der Kammer derart angeordnet ist, daß es den ersten reflektierten Strahl erhält und als zweiten reflektierten Strahl reflektiert, wobei die Substrate so angeordnet sind, daß mit dem zweiten reflektierten Strahl, entweder mit oder ohne weitere Reflexion durch das erste Substrat oder beide Substrate, ein abgehender Strahl parallel zum ankommenden Strahl geschaffen wird, daß der angehende Strahl so ausgerichtet ist, daß er durch ein Austrittsfenster (28: 58: 88: 108: 142) aus der Kammer herausverläuft, und daß außerhalb der Kammer erste Nachweismittel zur Abfühlung des abgehenden Strahls nach Durchlaufen des Austrittsfensters vorgesehen sind, wobei die ersten Nachweismittel zwei Detektoren zur Feststellung von P- und S-Polarisationskomponenten des abgehenden Strahls nach Aufteilung durch einen zwischen dem Austrittsfenster und den ersten Nachweismitteln angeordneten Ausgangsstrahlenteiler (30: 60: 90: 120) umfassen.

2. System nach Anspruch 1, welches einen zwischen den Strahleinstrahlungsmitteln und dem Eintrittsfenster angeordneten Eingangsstrahlenteiler (14: 44: 74: 104) aufweist.

3. System nach Anspruch 2, welches dem Eingangsstrahlenteiler zugeordnete zweite Nachweismittel (16: 46: 76: 106) aufweist.

4. System nach Anspruch 1, 2 oder 3, bei welchem das Eintrittsfenster (48: 78: 134) und das Austrittsfenster (58: 88: 136) auf der gleichen Seite der Kammer vorliegen.

5. System nach Anspruch 1, 2 oder 3, bei welchem ein einziges Fenster (108) sowohl als Eintrittsfenster als auch als Austrittsfenster dient und ein Strahlteiler (118) vor dem einen Fenster zur Trennung des abgehenden Strahls vom ankommenden Strahl angeordnet ist.

6. System nach irgendeinem vorstehenden Anspruch, bei welchem das erste Substrat und das zweite Substrat in rechtem Winkel zueinander angeordnet sind.

7. System nach Anspruch 3 oder irgendeinem von Anspruch 3 abhängigen Anspruch, mit einem Datenprozessor (148) und einer Schnittstellenschaltung (146), welche elektrische Signale erhält, die die Größe der zwei durch den Ausgangsstrahlenteiler erzeugten Strahlen und die Größe des durch den Eingangsstrahlenteiler erzeugten Strahls darstellen, und ein Ausgangssignal auf den Datenprozessor, welches Information hinsichtlich der relativen Größen der zwei Strahlen enthält, liefert.

8. Systen nach Anspruch 7, welches eine Ofensteuerung (150) enthält und bei welchem der Prozessor (148) ein Eingangssteuersignal für die Steuerung (150) erzeugt, so daß der Ofen in Abhängigkeit von den Eingangssignalen zum Prozessor gesteuert wird.

**Revendications**

1. Système d'ellipsomètre (10) destiné à mesurer l'épaisseur d'une pellicule déposée sur un substrat, comportant une chambre de traitement (20) avec une fenêtre d'entrée (18; 48; 78; 108; 134), un premier substrat (22; 52; 82; 112; 136) avec une surface réfléchissante positionné dans la chambre en alignement avec la fenêtre d'entrée et un dispositif (12, 14; 42, 44; 72, 74; 102, 104; 132) pour projeter un faisceau laser par la fenêtre d'entrée sur la surface réfléchissante du premier substrat de manière à produire un premier faisceau réfléchi, caractérisé en ce qu'un second substrat (24; 54; 84; 114; 138) avec une surface refléchissante est positionné dans la chambre en alignement pour recevoir et réfléchir le premier faisceau réfléchi comme un second faisceau réfléchi, les substrats étant positionnés de manière qu'un faisceau de sortie soit produit par le second faisceau réfléchi parallèlement au faisceau entrant, avec ou sans autres réflexions par le premier substrat ou les deux substrats, en ce que le faisceau de sortie est aligné pour passer par une fenêtre de sortie (28; 58; 88; 108; 142) de la chambre et en ce qu'un premier dispositif de détection est disposé à l'extérieur de la chambre pour détecter le faisceau sortant après son passage par la fenêtre de sortie, le premier dispositif de détection comportant deux détecteurs pour détecter des composantes de polarisation P et S du faisceau sortant après sa division par un séparateur de faisceau sortant (30; 60; 90; 120) positionné entre la fenêtre de sortie et le premier dispositif de détection.

2. Système selon la revendication 1, comprenant un séparateur de faisceau entrant (14; 44; 74; 104) positionné entre le dispositif de projection de faisceau et la fenêtre d'entrée.

3. Système selon la revendication 2, comprenant un second dispositif de détection (16; 46; 76; 106) associé avec le séparateur de faisceau entrant.

4. Système selon la revendication 1, 2 ou 3 dans lequel la fenêtre d'entrée (48; 78; 134) et la fenêtre de sortie (58; 88; 136) sont sur le même côté de la chambre.

5. Système selon la revendication 1, 2 ou 3 dans lequel une fenêtre (108) sert à la fois de fenêtre d'entrée et de fenêtre de sortie, un séparateur de faisceau (118) étant positionné devant la fenêtre pour séparer le faisceau sortant du faisceau entrant.

6. Système selon l'une quelconque des revendications précédentes dans lequel le premier substrat et le second substrat sont positionnés à angle droit entre eux.

7. Système selon la revendication 3, ou une revendication dépendunt de la revendication 3, comprenant un processeur de données (148) et un circuit d'interface (146) recevant des signaux électriques représentant l'amplitude des deux faisceaux produits par le séparateur de faisceau sortant et l'amplitude du faisceau entrant produit par le séparateur de faisceau entrant et produisant un signal de sortie pour le processeur de données contenant des informations quant aux amplitudes relatives des deux faisceaux.

8. Système selon la revendication 7, comportant un moniteur de four (150) et dans lequel le processeur (148) produit un signal de commande d'entrée pour le moniteur (150) de manière que le four soit commandé en dépendance des signaux d'entrée du processeur.

FIG. 1

FIG. 2

$I_0$ TO $\mu$P

$D_0$ —76

<u>70</u>

72— LASER → BS 74 → 78 → 82 80— FURNACE

86 86

92 — $D_p$
$I_p$ TO $\mu$P ←

$I_s$ TO $\mu$P ← $D_s$
94

90 88

84

<u>FIG. 3</u>

$I_0$ TO $\mu$P

$D_0$ —106

<u>100</u>

102— LASER → BS 104 → 118 BS → 108 → 112 110— FURNACE

114 116 116

$\theta$

120

122— $D_p$ $D_s$ —124

$I_p$ TO $\mu$P $I_s$ TO $\mu$P

<u>FIG. 4</u>

2

FIG. 5